# EUROPEAN PATENT SPECIFICATION

(11) **EP 3 466 870 B1**
(45) Date of publication and mention of the grant of the patent: **30.09.2026**
(21) Application number: 17806063.8
(22) Date of filing: 03.02.2017
(51) Int. Cl.: C01B 11/06, C07C 315/02, C07C 317/14

(54) **SURFACE-MODIFIED SODIUM HYPOCHLORITE PENTAHYDRATE CRYSTAL, AND METHOD FOR PRODUCING SAME**
OBERFLÄCHENMODIFIZIERTER NATRIUMHYPOCHLORITPENTAHYDRATKRISTALL UND VERFAHREN ZUR HERSTELLUNG DAVON
CRISTAL D'HYPOCHLORITE DE SODIUM PENTAHYDRATÉ MODIFIÉ EN SURFACE ET SON PROCÉDÉ DE PRODUCTION

(30) Priority: 30.05.2016 JP 2016107961
(43) Date of publication of application: 10.04.2019
(73) Proprietor: Nippon Light Metal Company, Ltd., Tokyo 140-8628 (JP)
(72) Inventor: SHIMAZU, Hideo, Shizuoka-shi Shizuoka 421-3203 (JP); OKADA, Tomohide, Shizuoka-shi Shizuoka 421-3203 (JP); ASAWA, Tomotake, Shizuoka-shi Shizuoka 421-3203 (JP); SUGIYAMA, Yukihiro, Tokyo 140-8628 (JP); SHIMADA, Kaoru, Tokyo 140-8628 (JP)
(74) Representative: Vossius & Partner Patentanwälte Rechtsanwälte mbB
(86) International application number: PCT/JP2017/004097
(87) International publication number: WO 2017/208501

(56) References cited:
- EP-A1- 3 549 909
- JP-A- 2000 290 003
- JP-A- 2014 169 215
- JP-A- S5 622 604
- JP-B1- S4 910 919
- US-A- 3 498 924
- US-A- 5 273 678
- YUKIHIRO SUGIYAMA ET AL.: "New Oxidizing Agent: Sodium Hypochlorite Pentahydrate and its Applications for Organic Syntheses", FINE CHEMICAL, vol. 44, no. 9, 15 September 2015 (2015-09-15), pages 53 - 60, XP009513906, ISSN: 0913-6150

## Description

### [Technical Field]

The present invention relates to a surface-modified sodium hypochlorite pentahydrate crystal that is surface-modified by intentionally attaching a salt and/or an acid to the surface of the crystal, and a method for producing same, and more specifically relates to a sodium hypochlorite pentahydrate crystal, an aqueous solution of which has a pH which can be lowered by the surface modification being carried out, and a method for producing same. The surface-modified sodium hypochlorite pentahydrate crystal of the present invention has characteristics such as those mentioned above, and is therefore particular useful as an oxidizing agent for chemical reactions.

### [Background Art]

Sodium hypochlorite pentahydrate (NaOCl·5H₂O) is a high purity solid (crystal), is less likely to decompose than existing aqueous solutions of sodium hypochlorite (sodium hypochlorite concentration: 13 mass%), which are widely commercially available, contains very little free sodium hydroxide or impurities such as sodium chloride, has a mass concentration of approximately 42 mass%, and exhibits good volumetric efficiency, and is therefore expected to be useful as an oxidizing agent and chlorinating agent in chemical reactions in addition to commonly used applications such as sterilizing or antimicrobial applications, and there have been reports of, for example, methods for producing ketones and aldehydes by oxidizing alcohols and methods for producing sulfonyl chloride compounds by oxidizing thiols or disulfides as examples of reactions in which sodium hypochlorite pentahydrate crystals are used as oxidizing agents (see PTL 1 and 2).

Therefore, sodium hypochlorite pentahydrate crystals can be advantageously used as an oxidizing agent for chemical reactions, but there are concerns that problems such as those mentioned below will still occur in order to utilize the oxidizing power of sodium hypochlorite pentahydrate crystals and expand the scope of use thereof to chemical reactions and the like.

That is, in order to effectively realize the oxidizing power and sterilizing power of sodium hypochlorite, it is said that hypochlorous acid (HClO), which is generated when sodium hypochlorite dissolves in water, is a key factor. However, because hypochlorous acid is a weak acid, if the pH of an aqueous solution is highly alkaline, hypochlorous acid decomposes into hypochlorite ions (ClO⁻) and the amount of hypochlorous acid present significantly decreases. For example, commercially available aqueous solutions of sodium hypochlorite in which the sodium hypochlorite concentration is 13 mass% have pH values of approximately 13 and contain almost no hypochlorous acid. In addition, in the case of sodium hypochlorite pentahydrate crystals produced using publicly known production methods (for example, see PTL 3), the amount of alkaline components (sodium hydroxide) derived from the production process is relatively low, but these are generally contained at approximately 0.03 to 0.1 mass% in crystals, and the pH of an aqueous solution in which the sodium hypochlorite concentration is 13 mass% is 11 or more and tends to be on the alkaline side, like the commercially available aqueous solutions mentioned above. In general, if the pH is adjusted to 10.0, the abundance ratio of hypochlorous acid increases to approximately 0.2%, and because this abundance ratio is approximately 100% in cases where the pH is reduced to approximately 5.0, it is possible to improve effectiveness in terms of oxidizing power or sterilizing power by sufficiently lowering the pH or even if the pH value decreases slightly. Moreover, if the pH is excessively lowered and the aqueous solution becomes strongly acidic, hypochlorous acid decomposes and generates toxic chlorine gas, and it is therefore essential to avoid excessive pH decrease.

Therefore, in order to expand the scope of use of sodium hypochlorite pentahydrate crystals into chemical reactions and the like, it is essential to increase the content of hypochlorous acid in crystals or aqueous solutions as far as possible so that the pH is as weakly acidic as possible at crystal surfaces or in aqueous solutions, and although this type of pH adjustment is necessary, this problem is not sufficiently recognized, and the problems described below were a concern when trying to solve this problem.

Firstly, when producing sodium hypochlorite, which is used as a raw material when producing sodium hypochlorite pentahydrate crystals, it is thought that lowering the amount of alkaline components remaining in the raw material lowers the amount of alkaline components remaining in the obtained sodium hypochlorite pentahydrate crystals. In this method, however, lowering the amount of alkaline components when producing the raw material causes a localized reduction in the amount of alkaline components in the reaction system, and this leads to concerns that the obtained sodium hypochlorite will decompose, thereby causing a reduction in yield. In addition, because simply lowering the amount of alkaline components in the reaction system leads to the risk of toxic chlorine, which is a raw material, and decomposition products thereof remaining and escaping, it is necessary to dramatically improve the raw material sodium hypochlorite production process, which requires much consideration regarding production conditions, and this requires a great deal of time and effort.

Secondly, in the sodium hypochlorite pentahydrate crystal production process, it is thought that by providing, for example, a step in which washing is carried out with a solvent such as water so as to wash off sodium hydroxide attached to crystal surfaces, the amount of alkaline components at the surface of ultimately obtained crystals will decrease. However, washing with a large quantity of water or the like leads to concerns that the obtained crystals will partially dissolve and the yield will decrease, and in addition there are concerns that a filtrate obtained by subjecting the crystals to solid-liquid separation will be unable to be used due to being diluted or contaminated with impurities, which lead to concerns regarding significant drawbacks in terms of time and cost. Furthermore, simply lowering the amount of alkaline components at crystal surfaces means that alkaline components still remain in the inner part of crystals, and it is not possible to effectively lower the pH when obtaining an aqueous sodium hypochlorite solution, and simply lowering the amount of alkaline components at crystal surfaces leads to concerns regarding problems such as the crystal surfaces readily decomposing and storage stability decreasing.

Thirdly, consideration has been given to methods for adjusting the pH of aqueous solutions using organic acids, inorganic acids, salts thereof, and the like, as aqueous sodium hypochlorite solutions using conventional sodium hypochlorite pentahydrate not during a production process, but depending on the method of addition, the acid concentration can become locally increased and liquid mixing can be insufficient, and consideration has therefore been given to problems such as localized pH increase occurring, hypochlorous acid decomposing, and toxic chlorine gas being generated. Therefore, concerns such as those mentioned above occur in cases where the pH of an aqueous solution is adjusted using conventional sodium hypochlorite pentahydrate, and not only do pH adjustment methods need to be established, which involves time and cost, but in some cases, procedures such as adding acids or salts thereof are required, meaning that there are concerns regarding limitations in terms of chemical reactions in which the sodium hypochlorite pentahydrate can be used.

Therefore, when sodium hypochlorite pentahydrate is used in chemical reactions and the like, the necessity and effectiveness of significantly lowering the pH at crystal surfaces and in aqueous solutions are extremely critical, but such problems have not yet been fully recognized, and although several means for solving these problems have been considered, there are concerns that such problems still occur, and it is currently the case that this issue has not been adequately investigated and developed. Therefore, new means for solving such existing problems need to be developed.

### [Citation List]

### [Patent Literature]

[PTL 1] Japanese Patent Application Publication No. 2015-063504
[PTL 2] Japanese Patent Application Publication No. 2015-074609
[PTL 3] Japanese Patent No. 4211130

### [Summary of Invention]

### [Technical Problem]

As a result of diligent research into solving such prior art problems, the inventors of the present invention surprisingly found that by using a surface-modified sodium hypochlorite pentahydrate crystal obtained by means of a surface modification by intentionally attaching a specific salt and/or acid to the surface of a sodium hypochlorite pentahydrate crystal used as a raw material, it was possible to significantly lower the pH of an aqueous solution without performing risky, high-cost pH adjustment that requires much time and effort, and without conducting a significant modification to a production process, and found that this surface-modified sodium hypochlorite pentahydrate crystal is useful as an oxidizing agent for chemical reactions, and thereby completed the present invention. Using a conventional sodium hypochlorite pentahydrate crystal as a raw material and subjecting this raw material to surface modification by intentionally attaching a prescribed salt and/or acid, and a thus obtained surface-modified sodium hypochlorite pentahydrate crystal, were not known in the past.

Therefore, the purpose of the present invention is to provide a sodium hypochlorite pentahydrate crystal, which exhibits excellent storage stability and an aqueous solution of which has a pH which can be significantly lowered safely and simply and at low cost without performing risky, high-cost pH adjustment that requires much time and effort, and without conducting a significant modification to a production process, etc.; and a method for producing the sodium hypochlorite pentahydrate crystal.

### [Solution to Problem]

Specifically, the gist of the present invention is as follows.
(1) A surface-modified sodium hypochlorite pentahydrate crystal which has a salt and/or an acid attached to the surface thereof, wherein
   the salt and/or acid produces an acid-derived anion having at least one acid dissociation constant (pKa) of 1.9 or more and 11 or less in aqueous solution, and wherein the surface-modified sodium hypochlorite pentahydrate crystal
   i) contains 0.001 to 0.7 mass% of sodium hydroxide and has an anion concentration of 500 ppm or more, or
   ii) contains 0.001 to 0.07 mass% of sodium hydroxide and has an anion concentration of 100 ppm or more and less than 500 ppm.
(2) The surface-modified sodium hypochlorite pentahydrate crystal according to (1), wherein the salt and/or acid produces an acid-derived anion having at least one acid dissociation constant (pKa) of 4 or more and 11 or less.
(3) The surface-modified sodium hypochlorite pentahydrate crystal according to (1), wherein the salt is one or more inorganic acid salts selected from a carbonate, a hydrogen carbonate, a sulfate, a hydrogen sulfate, a phosphate and a hydrogen phosphate, and/or one or more organic acid salts selected from a monocarboxylate, a dicarboxylate and a tricarboxylate, and wherein the acid is one or more organic acids selected from a monocarboxylic acid, a dicarboxylic acid and a tricarboxylic acid.
(4) The surface-modified sodium hypochlorite pentahydrate crystal according to (3), wherein the salt is one or more of sodium carbonate, sodium hydrogen carbonate, sodium sulfate, sodium hydrogen sulfate, sodium phosphate, disodium hydrogen phosphate, sodium dihydrogen phosphate, sodium acetate, monosodium oxalate, disodium oxalate, sodium citrate, disodium citrate and trisodium citrate, and wherein the acid is one or more of acetic acid, oxalic acid and citric acid.
(5) A method for producing the surface-modified sodium hypochlorite pentahydrate crystal according to any one of (1) to (4), comprising a surface modification for attaching a salt and/or an acid to the surface of a sodium hypochlorite pentahydrate crystal, wherein
   the salt and/or acid produces an acid-derived anion having at least one acid dissociation constant (pKa) of 1.9 or more and 11 or less, and
   wherein the surface modification comprises a washing step of washing the sodium hypochlorite pentahydrate crystal using a solution containing the salt and/or acid that produces an acid-derived anion having at least one acid dissociation constant (pKa) of 1.9 or more and 11 or less, and a solid-liquid separation step of separating the washed sodium hypochlorite pentahydrate crystal, or
   comprises a gas treatment step of bringing carbon dioxide gas into contact with sodium hypochlorite pentahydrate crystal.
(6) The method for producing a surface-modified sodium hypochlorite pentahydrate crystal according to (5),
   wherein the salt and/or acid produces an acid-derived anion having at least one acid dissociation constant (pKa) of 4 or more and 11 or less.
(7) The method for producing a surface-modified sodium hypochlorite pentahydrate crystal according to (5),
   wherein the salt is one or more inorganic acid salts selected from a carbonate, a hydrogen carbonate, a sulfate, a hydrogen sulfate, a phosphate and a hydrogen phosphate, and/or one or more organic acid salts selected from a monocarboxylate, a dicarboxylate and a tricarboxylate, and wherein the acid is one or more organic acids selected from a monocarboxylic acid, a dicarboxylic acid and a tricarboxylic acid.
(8) The method for producing a surface-modified sodium hypochlorite pentahydrate crystal according to (7), wherein the salt is one or more of sodium carbonate, sodium hydrogen carbonate, sodium sulfate, sodium hydrogen sulfate, sodium phosphate, disodium hydrogen phosphate, sodium dihydrogen phosphate, sodium acetate, monosodium oxalate, disodium oxalate, sodium citrate, disodium citrate and trisodium citrate, and wherein the acid is one or more of acetic acid, oxalic acid and citric acid.

### [Advantageous Effects of Invention]

The present invention can obtain a surface-modified sodium hypochlorite pentahydrate crystal, an aqueous solution of which has a pH which can be significantly lowered safely and simply and at low cost without performing risky, high-cost pH adjustment that requires much time and effort, and without conducting a significant modification to a production process, etc. Specifically, a sodium hypochlorite pentahydrate crystal obtained in this way is such that the pH of an aqueous solution in which the sodium hypochlorite concentration is 13 mass% can be lowered to less than 11, and preferably 9 to 10.5, thereby exhibiting the effectiveness thereof to a high degree. In addition, a sodium hypochlorite pentahydrate crystal obtained in this way exhibits excellent storage stability, and can therefore be expected to be far more useful not only in conventional applications, but also as an oxidizing agent for chemical reactions, and an expansion in terms of scope of use can be expected.

### [Description of Embodiments]

The present invention will now be explained in detail.

The sodium hypochlorite pentahydrate crystal used as a raw material in the present invention can be an ordinary commercially available product, and can also be produced using the method disclosed in, for example, Japanese Patent No. 4211130. Specifically, it is possible to obtain a high purity sodium hypochlorite pentahydrate crystal by reacting chlorine gas with a highly concentrated aqueous solution of sodium hydroxide so as to obtain a strongly alkaline mother liquor, subjecting sodium chloride to solid-liquid separation from the mother liquor, adding a seed crystal to the mother liquor so as to precipitate a sodium hypochlorite pentahydrate crystal, crystallizing by cooling to a temperature at which sodium chloride does not precipitate, and then filtering. In addition, an example of a commercially available product is "Nikkei Ziaso Pentahydrate" available from Nippon Light Metal Co., Ltd.

In addition, the surface-modified sodium hypochlorite pentahydrate crystal according to the present invention is such that the concentration of sodium hydroxide at the surface and in the inner part of the crystal is 0.001 to 0.7 mass% in cases where the concentration of the anions mentioned below is 500 ppm or more. If the sodium hydroxide concentration is less than 0.001 mass%, storage stability in an open atmosphere decreases for reasons such as the sodium hypochlorite readily reacting with carbon dioxide in air and decomposing, and this leads to concerns that the sodium hypochlorite cannot be used. In addition, if the sodium hydroxide concentration exceeds 0.7 mass%, the pH of the aqueous solution increases, and the aqueous solution is not fit for purpose. The sodium hydroxide concentration is more preferably 0.001 to 0.05 mass%. Meanwhile, in cases where the concentration of the anions mentioned below is 100 ppm or more and less than 500 ppm, the sodium hydroxide concentration is 0.001 to 0.07 mass%, and preferably 0.005 to 0.05 mass%.

In addition, the moisture content (attached liquid content) of attached liquids other than water of hydration contained at the surface or in the inner part of the surface-modified sodium hypochlorite pentahydrate crystal according to the present invention is preferably not more than 2.5 mass%, and is more preferably 0.5 to 2.0 mass% from the perspective of improving the storage stability of the sodium hypochlorite pentahydrate crystal.

In addition, the content of sodium chloride at the surface or in the inner part of the surface-modified sodium hypochlorite pentahydrate crystal according to the present invention is preferably not more than 1.5 mass%, and is more preferably not more than 1.0 mass%, and further preferably not more than 0.5 mass%, from the perspective of suppressing a secondary reaction when the surface-modified sodium hypochlorite pentahydrate crystal is used in an organic synthesis reaction.

In addition, because there are concerns regarding effects of sodium hypochlorite disproportionation reactions if sodium chlorate is contained and organic reactions caused by the presence of impurities, it is preferable for the content of sodium chlorate to be not more than 1.0 mass% at the surface or in the inner part of the surface-modified sodium hypochlorite pentahydrate crystal according to the present invention. This content is more preferably not more than 0.5 mass%, and further preferably not more than 0.01 mass%. Similarly, the content of sodium bromate is preferably not more than 10 ppm, and more preferably not more than 1 ppm (the detection limit).

Here, the sodium hydroxide, sodium chloride, sodium chlorate and sodium bromate mentioned above are all inevitably introduced in the production process of the sodium hypochlorite pentahydrate crystal, which is a raw material, and in the present invention, these should be differentiated from anion components derived from salts and/or acids imparted (attached or generated) during the surface modification treatment described below. That is, the anion components mentioned below do not include hydroxide ions, chloride ions, chlorate ions and bromate ions, which are inevitably introduced in the raw material production process. Moreover, the target sodium hydroxide, sodium chloride, sodium chlorate and sodium bromate content values are achieved by the sodium hypochlorite pentahydrate crystal produced by Nippon Light Metal Co., Ltd. ("Nikkei Ziaso Pentahydrate"), and this product is therefore preferably used as a raw material.

Moreover, the mass concentration should be as high as possible, and preferably 42 mass% or more, in the sodium hypochlorite pentahydrate crystal used as a raw material in the present invention from the perspective of improving volumetric efficiency. The sodium hypochlorite pentahydrate crystal produced by Nippon Light Metal Co., Ltd. ("Nikkei Ziaso Pentahydrate") satisfies this mass concentration.

In the present invention, it is possible to obtain a surface-modified sodium hypochlorite pentahydrate crystal by using a sodium hypochlorite pentahydrate crystal such as that mentioned above as a raw material and carrying out a surface modification of attaching, to the surface of the crystal, a salt and/or an acid that produces an acid-derived anion having at least one acid dissociation constant (pKa) of 1.9 to 11 in water (at 25°C). Moreover, The wording "at least one" means that in the case of an acid having a multistage acid dissociation constant (pKa), the acid dissociation constant in at least one dissociation stage should fall within the range mentioned above. Acids that satisfy this requirement are not particularly limited, but examples thereof include inorganic acids such as carbonic acid, sulfuric acid and phosphoric acid and organic acids such as monocarboxylic acids (for example, acetic acid), dicarboxylic acids (for example, oxalic acid) and tricarboxylic acids (for example, citric acid), and a variety of these salts and/or acids can be used within the scope of the present invention. Use of a salt and/or acid that produces an acid-derived anion in which the acid dissociation constant (pKa) at every stage falls within the range mentioned above is preferred from the perspective of achieving the pH reduction and/or stabilization described below. In addition, when a prescribed salt and/or acid is attached to the surface of the sodium hypochlorite pentahydrate crystal and the crystal is dissolved in water so as to obtain an aqueous solution, the detailed mechanism cannot be fully clarified, but it is assumed that the acid-derived anion component contained in the aqueous solution causes a buffering effect, thereby lowering the pH and/or effecting stabilization, and this enables the pH of the obtained aqueous solution of sodium hypochlorite in which the mass concentration is 13 mass% to be lowered to approximately 10, thereby improving reactivity such as oxidizing power or sterilizing power. From such perspectives, in order to prevent the pH from reaching 4, at which chlorine gas starts to be generated due to decomposition of hypochlorous acid, it is preferable to use a salt and/or an acid that produces an acid-derived anion having an acid dissociation constant (pKa) of 4 or more, and particularly preferable to use a salt and/or an acid that produces an acid-derived anion having an acid dissociation constant (pKa) of 5 or more. The upper limit for the dissociation constant (pKa) of this anion is preferably not more than 11 because it is assumed that a pH reduction caused by a buffering effect will be observed, and because hypochlorous acid is generated at a pH of not more than 10, it is particularly preferable to use a salt and/or an acid that produces an acid-derived anion having an acid dissociation constant (pKa) of not more than 10. Moreover, the term "acid-derived anion" in the present invention means an anion of an acid, for example, a carbonate ion or hydrogen carbonate ion in the case of carbonic acid, and the same is true for other acids.

A detailed explanation of the surface modification will now be given.

The surface modification in the present invention is not particularly limited as long as it is possible to attach the salt and/or acid to the surface of the sodium hypochlorite pentahydrate crystal that is a raw material, but the methods described below can be given as specific examples.

In a first surface modification method, a sodium hypochlorite pentahydrate crystal that is a raw material is subjected to a washing treatment in which the raw material sodium hypochlorite pentahydrate crystal is washed using a solution that contains a salt and/or an acid [that is, that produces an acid-derived anion having at least one acid dissociation constant (pKa) of 1.9 to 11] (a washing step). By carrying out this treatment, the salt and/or acid is attached to the surface of the sodium hypochlorite pentahydrate crystal that is a raw material. Examples of specific methods include a method of subjecting a raw material sodium hypochlorite pentahydrate crystal to surface modification by mixing with a solution that contains the salt and/or acid (a washing liquid) and a method of carrying out surface modification while filtering the sodium hypochlorite pentahydrate crystal. Here, the mechanism by which the salt and/or acid is attached to the crystal surface by this type of washing treatment and the state in which the attached salt and/or acid is present are not necessarily clear, but as confirmed in the working examples given below, anion components are detected at quantities not contained in the raw material, and it is therefore found that an effect is achieved by this intentional washing treatment. It is assumed that the state in which the salt and/or acid is present is by being coated as a thin liquid film on the crystal surface or attached to the crystal surface as an ultrafine solid.

In addition, the solution used in the washing step contains the salt and/or acid [that is, a salt and/or an acid that produces an acid-derived anion having at least one acid dissociation constant (pKa) of 1.9 to 11], with preferred specific examples of salts including one or more inorganic acid salts selected from carbonates, hydrogen carbonates, sulfates, hydrogen sulfates, phosphates and hydrogen phosphates and one or more organic acid salts selected from monocarboxylates, dicarboxylates and tricarboxylates, and preferred specific examples of acids including one or more organic acids selected from monocarboxylic acids, dicarboxylic acids and tricarboxylic acids. More specifically, alkali metal salts of the inorganic acid salts and organic acid salts mentioned above (that is, sodium carbonate, sodium hydrogen carbonate, sodium sulfate, sodium hydrogen sulfate, sodium phosphate, disodium hydrogen phosphate, sodium dihydrogen phosphate, sodium acetate, monosodium oxalate, disodium oxalate, sodium citrate, disodium citrate, trisodium citrate, and the like) can be used more preferably as the salt, and acetic acid, oxalic acid, citric acid, and the like, can be used more preferably as the acid. In cases where the salts or acids mentioned above are solid, it is preferable to use a salt or acid that dissolves in water to form an aqueous solution, and it is preferable to use a liquid component as-is or as an aqueous solution. In addition, when the surface-modified sodium hypochlorite pentahydrate crystals to which these salts and/or acids are attached by means of the solid-liquid separation described below are dissolved in water, anion components are generated, but because it is thought that these immediately dissociate in water, it is possible to detect anion component amounts as dissociated anion components such as carbonate ions, sulfate ions, phosphate ions, oxalate ions, acetate ions or citrate ions. Moreover, it is possible to use one salt and one acid in the washing liquid used in the surface modification, or mixtures of two or more types thereof.

When the washing step is carried out, it is preferable for the temperature of the washing liquid being used to be as low as possible in order to prevent the raw material sodium hypochlorite pentahydrate crystals from excessively dissolving in the washing liquid. Specifically, the temperature of the washing liquid is preferably the freezing point or higher to 25°C, more preferably -10°C to 15°C, and further preferably -10°C to 10°C. In addition, the content of the salt and/or acid dissolved in the washing liquid being used is selected as appropriate according to the type of salt and/or acid being used, but it is preferable to use a solution that is not higher than the saturation solubility in order to prevent excessive precipitation and coagulation at crystal surfaces following the surface modification, but if the concentration is too low, only water washing is carried out, with no surface treatment, meaning that it is preferable for this content to be at least one third of the saturation solubility, and more preferably at least half the saturation solubility. Furthermore, with regard to the treatment time, because there are concerns regarding the sodium hypochlorite pentahydrate crystals dissolving or slowly decomposing if washing is carried out for a long period of time, the washing step duration is preferably not more than 15 minutes, more preferably not more than 10 minutes, and further preferably not more than 5 minutes.

After carrying out this type of washing step, a solid-liquid separation treatment for separating crystals from the treatment liquid (a solid-liquid separation step) is carried out if necessary. In terms of a specific method, an ordinary filtration device such as a Buchner funnel can be used, but it is preferable to use a centrifugation filtration device or pressure filter in order to avoid excessive contact with carbon dioxide in air and remove liquid components attached to the surface-modified sodium hypochlorite pentahydrate crystals to a content of not more than 2.5 mass%. Here, if the duration, heating or pressure reduction is excessive, there are concerns that the sodium hypochlorite pentahydrate crystals will deliquesce during the solid-liquid separation or degenerate due to water of crystallization being lost. Therefore, the temperature during the solid-liquid separation is preferably maintained at -10°C to 25°C, and more preferably -10°C to 15°C. The atmosphere gas is preferably a dehumidified inert gas, with nitrogen gas, argon gas, and the like, being preferred. In addition, the duration of the solid-liquid separation step is preferably 1 to 15 minutes, more preferably 2 to 10 minutes, and further preferably 3 to 10 minutes.

Moreover, the surface modification in the present invention is carried out by gas treatments (described later) or washing treatments, and it is possible to include combinations of these. For example, it is possible to carry out the washing step and the solid-liquid separation step simultaneously, or add the salt and/or acid before or after carrying out the sodium hypochlorite pentahydrate crystal crystallization step, and when filtering and removing the slurry in the sodium hypochlorite pentahydrate crystal crystallization step, it is possible to bring the slurry into contact with a gas such as carbon dioxide, as described below, while carrying out solid-liquid separation.

Meanwhile, as another method for carrying out a surface modification, it is possible to carry out a gas treatment step in which the raw material sodium hypochlorite pentahydrate crystals are brought into contact with an oxidizing gas which is carbon dioxide so as to attach or generate the salt and/or acid at the surface of the crystals. Sulfur dioxide gas, which exhibits similar acidity, reacts rapidly with hypochlorous acid and sodium hypochlorite, thereby causing hypochlorous acid to decompose, and is therefore not preferred.

The concentration of the gas being used is selected as appropriate, but in order to prevent excessive contact, it is preferable to dilute to a concentration of 0.1 to 10 vol% by mixing with an inert gas such as air or nitrogen, and then bring the gas into contact with the crystals. The period of contact with the gas is preferably not more than 10 minutes, and more preferably not more than 5 minutes, in order to prevent excessive decomposition of the sodium hypochlorite pentahydrate crystals. The temperature should be set to -10°C to 10°C. Moreover, when the gas treatment is carried out, a surface that has been excessively treated with carbon dioxide gas becomes acidic and causes decomposition of the sodium hypochlorite pentahydrate, and it is therefore necessary to rapidly replace the gas with nitrogen or the like and store in a sealed container when a required amount of free sodium hydroxide on the surface has been treated.

Moreover, the mechanism by which the gas is attached to crystal surfaces in this gas treatment step and the state in which the attached or generated salt and/or acid is present are not necessarily clear, but it is assumed that, for example, a salt being generated as a result of sodium hydroxide present at crystal surfaces reacting with carbon dioxide in the gas is the dominant mechanism, but this is not the only possible mechanism. With regard to this, it can be confirmed that carbonate ions are detected at larger quantities than the quantity of carbonate ions contained in the raw material in cases where treatment with carbon dioxide gas is carried out, as confirmed in the working examples given below, and because the pH decreases when an aqueous solution is formed, it is a fact that it can be confirmed that an effect is achieved by carrying out this intentional gas treatment.

Incidentally, an example of this gas treatment is a method of blowing carbon dioxide gas such as that mentioned above into the slurry prior to filtration in the sodium hypochlorite pentahydrate crystal crystallization step in the raw material sodium hypochlorite pentahydrate crystal production process.

In addition, surface-modified sodium hypochlorite pentahydrate crystals obtained using this type of surface modification treatment are such that i) the concentration of anions that produce the salt and/or acid attached to the crystal surface is 500 ppm or more if the sodium hydroxide concentration is 0.001 to 0.7 mass%. In the present invention, the anion concentration is defined as the total concentration (ppm) of anions detected when the surface-modified sodium hypochlorite pentahydrate crystals are subjected to ion chromatography measurements. In addition, if the anion concentration is less than 500 ppm in case i) above, it is not possible to bring about a sufficient pH-lowering effect and/or buffering effect when the crystals are diluted to a concentration similar to that in a commercially available aqueous solution of sodium hypochlorite, such as 13 mass%, and it is not possible to lower and/or stabilize the pH of the system. From the perspective of this type of pH lowering and/or stabilizing effect, the anion concentration is preferably 1000 ppm or more. Meanwhile, ii) the anion concentration is 100 ppm or more and less than 500 ppm in cases where the sodium hydroxide concentration is lower, namely 0.001 to 0.07 mass%. In this case, the effect of the sodium hydroxide is lower, and even if the anion concentration is 100 ppm or more and less than 500 ppm, it is assumed that the buffering effect mentioned above can be realized well. Moreover, with regard to the upper limit of the anion concentration in case i) above, because it can be expected that the pH-lowering and/or stabilizing effect will be realized to a far greater extent if the anion concentration is increased, it is necessary to increase the amount of salt and/or acid attached or generated at the surface of the sodium hypochlorite pentahydrate crystals in order to increase the amount of anions, although this is not clearly understood, and in such cases, there are concerns that coloration will occur, appearance will deteriorate and localized concentration distribution will occur at the surface, thereby impairing product quality. Therefore, the upper limit of the anion concentration is preferably a value at which these appearance and product quality problems do not occur, and is generally more preferably not more than 50,000 ppm (5 mass%).

In addition, an aqueous solution (sodium hypochlorite concentration: 13 mass%) obtained by dissolving, in water, surface-modified sodium hypochlorite pentahydrate crystals obtained by means of this type of surface modification treatment has a pH of less than 11, and preferably approximately 9.0 to 10.5 (at a temperature of 15°C) .

### Working Examples

Preferred embodiments of the present invention will now be explained in detail on the basis of working examples and comparative examples, but it should not be understood that the present invention is limited to these examples. Moreover, in the working examples and comparative examples given below, percentages are on a mass basis unless explicitly stated otherwise.

First, crystals produced with reference to the methods disclosed in Japanese Patent No. 4211130 were used as the raw material sodium hypochlorite pentahydrate crystals used in the working examples and comparative examples below, and these raw material sodium hypochlorite pentahydrate crystals had a mass concentration of 44.5 mass%, a sodium chlorate content of 0.02 mass%, a sodium chloride content of 0.3 mass%, an attached liquid content of 0.2 mass% (calculated value), a free sodium hydroxide content of 0.1 mass%, and a carbonate ion content of 345 ppm. Moreover, a sodium hypochlorite aqueous solution containing 13 mass% of these crystals had a pH of 11. These concentration and pH measurements were carried out using the methods described below.

### [Effective chlorine concentration and sodium hypochlorite concentration]

Effective chlorine concentration was calculated using the iodine method in accordance with the method described below. First, approximately 0.1 g of sodium hypochlorite pentahydrate crystals were weighed out into a beaker and dissolved in approximately 20 mL of ion exchanged water. To this was added approximately 2.0 g of potassium iodide and 10 mL of a 50% aqueous solution of acetic acid. Free iodine was titrated using a 0.1 N aqueous solution of sodium thiosulfate (volumetric analysis use). Here, the amount of the 0.1 N aqueous solution of sodium thiosulfate required for the titration was A mL, and the effective chlorine concentration (mass%) was determined by inputting this value into formula (1) below.

In addition, the sodium hypochlorite concentration was calculated from the calculated effective chlorine concentration using formula (2) below.
[Math. 1] $\begin{matrix}\left[Effective chlorine concentration\left(mass%\right)\right] \\ = \left(\frac{35.45 \times 0.1 \times A}{1000}\right) \div sample \left(g\right) \times 100\end{matrix}$
$\begin{matrix}\left[Sodium hypochlorite concentration \left(mass%\right)\right] \\ = \left[Effective chlorine concentration \left(mass%\right)\right] \times 74.44 \div \\ 70.91\end{matrix}$

### [Anion concentration and sodium chlorate concentration]

The anion concentration and sodium chlorate concentration in the sodium hypochlorite pentahydrate crystals were measured by means of ion chromatography.

First, 0.2 g of sodium hypochlorite pentahydrate crystals was dissolved in 30 g of water, and the amount of anions and the amount of chloride ions were measured by means of ion chromatography. In cases where problems such as overlapping peaks occurred during the analysis and in cases where analyzable ranges were exceeded, the amount of anions was measured after further dilution. In the ion chromatography, measurements were carried out using hydrochloric acid as an eluant, using a 2000i (product name) available from Dionex and an ICE-ASI (product name) column.

### [Sodium hydroxide concentration]

10 g of sodium hypochlorite pentahydrate crystals was measured out into a beaker, an aqueous solution of hydrogen peroxide was slowly added thereto, and addition of the aqueous solution of hydrogen peroxide was stopped at the point when production of oxygen gas by the reaction stopped. After thoroughly shaking and mixing, 1 or 2 drops of a phenolphthalein solution was added and titration was carried out using 0.1 N hydrochloric acid until the red color disappeared. Here, the amount of the 0.1 N hydrochloric acid required for the titration was B mL, and the sodium hydroxide concentration in the sodium hypochlorite pentahydrate crystals was determined by inputting this value into formula (3) below.
[Math. 2] $\begin{matrix}\left[Sodium hydroxide concentration\left(%\right)\right] \\ = \left(\frac{40.01 \times 0.1 \times B}{1000}\right) \div sample \left(g\right) \times 100\end{matrix}$

### [Sodium chloride concentration]

The sodium chloride concentration can be obtained by subtracting the sodium hypochlorite concentration from the total chloride ion concentration. Approximately 0.1 g of sodium hypochlorite pentahydrate crystals was weighed out into a beaker and dissolved in approximately 20 mL of ion exchanged water, and a 30% aqueous solution of hydrogen peroxide was added thereto until bubbles no longer appeared. 1 to 2 drops of a phenolphthalein solution was then added, and in cases where the color changed to pink, a 2% aqueous solution of nitric acid was added until the solution became colorless and transparent. 2 mL of a 5% aqueous solution of potassium chromate was added to this solution, and titration was carried out using a 0.1 N aqueous solution of silver nitrate (volumetric analysis use). Here, the amount of the 0.1 N aqueous solution of silver nitrate required for the titration was C mL, and the sodium chloride concentration in the sodium hypochlorite pentahydrate crystals was determined from the total chloride ion concentration, which was obtained by inputting this value into formula (4) below, using formula (5) below.
[Math. 3] $\begin{matrix}\left[Total chloride ion concentration\left(%\right)\right] \\ = \left(\frac{35.45 \times 0.1 \times C}{1000}\right) \div sample \left(g\right) \times 100\end{matrix}$
[Math. 4] $\begin{matrix}\left[Sodium chloride concentration\left(%\right)\right] \\ = \left\{\begin{matrix}\left[Total chloride ion concentration \left(mass%\right)\right] \\ - \left(\frac{\left[Effective chlorine concentration \left(mass%\right)\right]}{2}\right)\end{matrix}\right\} \times \left(\frac{58.5}{35.5}\right)\end{matrix}$

### [pH measurement]

pH was measured by first weighing out approximately 2 g of sodium hypochlorite pentahydrate crystals into a beaker and calculating from the sodium hypochlorite concentration calculated using formula (2) above, and then adding ion exchanged water and dissolving the sodium hypochlorite pentahydrate crystals so as to attain a concentration of 13 mass%. After thoroughly shaking and mixing, the pH of the sodium hypochlorite solution was measured (at a temperature of 15°C) using a pH meter (Handy pH Meter D-51 available from Horiba, Ltd.).

### [Working Example 1]

100.0 g of raw material sodium hypochlorite pentahydrate crystals was weighed out and placed in a 1-L PVC bag in a nitrogen atmosphere, and to this was added 1.0 g of carbon dioxide gas [pKa of carbonic acid: 6.11, 9.87 (in water at 25°C), Handbook of Chemistry: Pure Chemistry II, Revised 5th edition (20th February 2004, edited by the Chemical Society of Japan, published by Maruzen Co., Ltd.)], and the contents of the bag were then brought into contact with the gas for 15 minutes while being agitated, thereby subjecting the crystals to surface modification. Surface-treated sodium hypochlorite pentahydrate crystals (100.1 g) were removed from the bag, and these crystals were placed in a polymer container, which was flushed with nitrogen and placed in refrigerated storage at - 20°C. Here, the sodium hypochlorite concentration in the crystals following the surface modification was 38.1 mass%, the carbonate ion content was 3312 ppm, and the sodium hydroxide content was 0.013 mass%. When the surface-treated sodium hypochlorite pentahydrate crystals were diluted with water so as to form an aqueous solution having a mass concentration of 13 mass%, the pH was 9.2.

### [Working Example 2]

50.0 g of sodium hypochlorite pentahydrate crystals was placed in a 200-mL conical beaker, 25.1 g of an aqueous solution of sodium hydrogen carbonate prepared so as to have a concentration of 75 mg/mL (a washing liquid) [pKa of carbonic acid: 6.11, 9.87 (in water at 25°C), see the citation above] was introduced into the beaker and allowed to stand for 10 minutes so as to form a slurry, and the crystals were then washed (a washing step). Next, as a separation step, the slurry that had been allowed to stand was subjected to solid-liquid separation for 3 minutes at a temperature of 15°C in a nitrogen atmosphere using a centrifugal separator (an SYK-3800-15A small dehydrator available from Sanyo Rikagaku Co., Ltd.), thereby obtaining 28.5 g of surface-modified sodium hypochlorite pentahydrate crystals and 40.9 g of an aqueous solution of sodium hypochlorite (filtrate). The sodium hypochlorite concentration in the obtained crystals was 44.5 mass%, the sodium chloride concentration was 0.2 mass%, and the sodium hydroxide concentration was 0.07 mass%. In addition, the carbonate ion content in the crystals was 4250 ppm. In addition, when the obtained sodium hypochlorite pentahydrate crystals were diluted with water so as to form an aqueous solution having a mass concentration of 13 mass%, the pH was 10.3, the attached liquid content (calculated value) was 0.1 mass%, and the yield was 57 mass%. Next, these surface-modified sodium hypochlorite pentahydrate crystals were placed in a polymer container and stored for 1 month at a temperature of -20°C, after which the rate of decomposition was measured, but as shown in Table 1, the rate of decomposition of sodium hypochlorite was 1.3%, which indicates that storage stability was good.

**[Table 1]**

| | At start | 1st day | 5th day | 10th day | 15th day | 30th day |
|---|---|---|---|---|---|---|
| Sodium hypochlorite concentration (mass %) | 44.5 | 44.2 | 44.0 | 44.6 | 44.2 | 43.9 |

### [Working Example 3]

Surface modification was carried out under the same conditions as those used in Working Example 2, except that sodium hydrogen sulfate [pKa of sulfuric acid: 1.96 (in water at 25°C), see the citation above] was used as the inorganic salt used in the washing liquid, thereby obtaining 26.8 g of surface-modified sodium hypochlorite pentahydrate crystals and 44.4 g of an aqueous solution of sodium hypochlorite (filtrate). The sodium hypochlorite concentration in the obtained crystals was 38.8 mass%, the sodium chloride concentration was 0.8 mass%, the sodium hydroxide concentration was 0.07 mass%, and the sulfate ion content was 3.0 mass%. When the obtained crystals were diluted with water so as to form an aqueous solution having a mass concentration of 13 mass%, the pH was 9.6. In addition, the yield was 46 mass%.

### [Working Example 4]

Surface modification was carried out under the same conditions as those used in Working Example 2, except that sodium hydrogen phosphate [pKa of phosphoric acid: 1.83, 6.43, 11.46 (in water at 25°C), see the citation above] was used as the inorganic salt used in the washing liquid, thereby obtaining 23.1 g of surface-modified sodium hypochlorite pentahydrate crystals and 38.0 g of an aqueous solution of sodium hypochlorite (filtrate). The sodium hypochlorite concentration in the obtained crystals was 38.9 mass%, the sodium chloride concentration was 1.4 mass%, the sodium hydroxide concentration was 0.06 mass%, and the phosphate ion content was 2.3 mass%. When the obtained crystals were diluted with water so as to form an aqueous solution having a mass concentration of 13 mass%, the pH was 10.6, and the yield was 40 mass%.

### [Working Example 5]

Surface modification was carried out under the same conditions as those used in Working Example 2, except that the inorganic salt used in the washing liquid was replaced with potassium hydrogen carbonate, thereby obtaining 26.2 g of surface-modified sodium hypochlorite pentahydrate crystals and 36.4 g of an aqueous solution of sodium hypochlorite (filtrate). The sodium hypochlorite concentration in the obtained crystals was 45.0 mass%, the sodium chloride concentration was 0.2 mass%, the sodium hydroxide concentration was 0.15 mass%, and the carbonate ion content was 5225 ppm. When the obtained crystals were diluted with water so as to form an aqueous solution having a mass concentration of 13 mass%, the pH was 10.3, and the yield was 53 mass%.

### [Working Example 6]

Surface modification was carried out under the same conditions as those used in Working Example 2, except that oxalic acid [pKa: 1.04, 3.82 (in water at 25°C), see the citation above] was used as the inorganic salt used in the washing liquid, thereby obtaining 23.2 g of surface-modified sodium hypochlorite pentahydrate crystals and 34.7 g of an aqueous solution of sodium hypochlorite (filtrate). The sodium hypochlorite concentration in the obtained crystals was 45.0 mass%, the sodium chloride concentration was 0.2 mass%, the sodium hydroxide concentration was 0.02 mass%, and the oxalate ion content was 1910 ppm. When the obtained crystals were diluted with water so as to form an aqueous solution having a mass concentration of 13 mass%, the pH was 10.7, and the yield was 46 mass%.

### [Working Example 7]

Surface modification was carried out under the same conditions as those used in Working Example 2, except that the concentration of sodium hydrogen carbonate used in the washing liquid was changed to 25 mg/mL, thereby obtaining 19.2 g of surface-modified sodium hypochlorite pentahydrate crystals and 39.1 g of an aqueous solution of sodium hypochlorite (filtrate). The sodium hypochlorite concentration in the obtained crystals was 45.0 mass%, the sodium chloride concentration was 0.2 mass%, the sodium hydroxide concentration was 0.006 mass%, and the carbonate ion content was 745 ppm. When the obtained crystals were diluted with water so as to form an aqueous solution having a mass concentration of 13 mass%, the pH was 10.3, and the yield was 39 mass%.

### [Working Example 8]

Surface modification was carried out under the same conditions as those used in Working Example 2, except that the concentration of sodium hydrogen carbonate used in the washing liquid was changed to 5 mg/mL and the introduced amount was changed to 50.3 g, thereby obtaining 9.7 g of surface-modified sodium hypochlorite pentahydrate crystals and 73.5 g of an aqueous solution of sodium hypochlorite (filtrate). The sodium hypochlorite concentration in the obtained crystals was 44.7 mass%, the sodium chlorate concentration was 0.01 mass%, the sodium chloride concentration was 0.3 mass%, the free sodium hydroxide concentration was 0.002 mass%, and the carbonate ion content was 205 ppm. Moreover, a sodium hypochlorite aqueous solution containing 13 mass% of these crystals had a pH of 10.3.

### [Comparative Example 1]

As mentioned above, the raw material sodium hypochlorite pentahydrate crystals, prior to surface modification, had a mass concentration of 44.5 mass%, a sodium chlorate content of 0.02 mass%, a sodium chloride content of 0.3 mass%, an attached liquid content of 0.2 mass%, a free sodium hydroxide content of 0.1 mass%, and a carbonate ion content of 345 ppm. Moreover, a sodium hypochlorite aqueous solution containing 13 mass% of these crystals had a pH of 11.

### [Comparative Example 2]

Washing was carried out under the same conditions as those used in Working Example 2, except that pure water was used as the washing liquid, thereby obtaining 37.2 g of sodium hypochlorite pentahydrate crystals and 25.9 g of an aqueous solution of sodium hypochlorite (filtrate). The sodium hypochlorite concentration in the obtained crystals was 44.2 mass%, the sodium chloride concentration was 0.3 mass%, the sodium hydroxide concentration was 0.005 mass%, and the carbonate ion content was 71 ppm. In addition, when the obtained sodium hypochlorite pentahydrate crystals were diluted with water so as to form an aqueous solution having a mass concentration of 13 mass%, the pH was 10.2. The water content was 0.1%, and the yield was 74%. Sodium hypochlorite pentahydrate crystals obtained under these conditions were highly deliquescent, and deliquesced or decomposed after reacting with moisture or carbon dioxide in air within 1 to 2 minutes. Furthermore, it was found that these crystals were readily decomposed by an acid, that is, the crystals rapidly decomposed and produced the smell of chlorine when 1 drop of hydrochloric acid was added in order to adjust a solution, which was obtained by diluting the crystals to a concentration of 13 mass%, to a pH of 10.

### [Synthesis reaction using surface-modified sodium hypochlorite pentahydrate crystals]

### [Test Example 1]

Using the surface-modified sodium hypochlorite pentahydrate crystals obtained in Working Example 2, a sulfide sulfonation reaction was carried out in order to confirm the effect achieved by the surface modification.

1.24 g (10 mmol) of thioanisole and 30 mL of toluene were placed in a 50-mL 3-mouthed flask and, while stirring the contents of the flask in a water bath at a temperature of 20°C, 12.75 g (24 mmol, pH 10.3) of an aqueous solution, which was obtained by diluting the sodium hypochlorite pentahydrate crystals obtained in Working Example 2 to a concentration of 13 mass% with water, was added all at once to the flask. The reaction temperature increased to 25.3°C after 2 minutes, and then approached 20°C. When internal standard analysis was carried out by means of gas chromatography (using a GC-2014 available from Shimadzu Corporation) after 3 hours, it was found that 99.4 mass% of methylphenylsulfone had been generated as a product. Sodium sulfite was added to this reaction liquid, the toluene layer was separated off, washed with water and dried using Glauber's salt, after which the solvent was distilled off to obtain 1.59 g of white crystals (yield: 98.5%), which had a melting point of 86°C. (Literature value, 86°C to 87°C; Makosaza et al., Org. Lett. 2005, 7, 2945 to 2948.) When analysis was carried out by means of GCMS (GC-17A, GCMS-QP5050A, available from Shimadzu Corporation), m/z = 156 (M⁺)*.*

### [Test Example 2]

In the same way as in Test Example 1, a sulfide sulfonation reaction was carried out using the surface-modified sodium hypochlorite pentahydrate crystals obtained in Working Example 8 in order to confirm the effect achieved by the surface modification.

1.24 g (10 mmol) of thioanisole and 30 mL of toluene were placed in a 50-mL 3-mouthed flask and, while stirring the contents of the flask in a water bath at a temperature of 20°C, 12.71 g (24 mmol, pH 10.3) of an aqueous solution, which was obtained by diluting the sodium hypochlorite pentahydrate crystals obtained in Working Example 8 to a concentration of 13 mass% with water, was added all at once to the flask. The reaction temperature increased to 23.8°C after 4 minutes, and then approached 20°C. When GC internal standard analysis was carried out after 3 hours, it was found that 98.8 mass% of methylphenylsulfone had been generated as a product. Sodium sulfite was added to this reaction liquid, the toluene layer was separated off, washed with water and dried using Glauber's salt, after which the solvent was distilled off to obtain 1.59 g of white crystals (yield: 98.5%), which had a melting point of 86°C. In addition, when analysis was carried out by means of GCMS, m/z = 156 (M⁺).

### [Comparative Test Example 1]

1.24 g (10 mmol) of thioanisole and 30 mL of toluene were placed in a 50-mL 3-mouthed flask and, while stirring the contents of the flask in a water bath at a temperature of 20°C, 12.75 g (24 mmol, pH 11.0) of an aqueous solution, which was obtained by diluting commercially available sodium hypochlorite pentahydrate crystals (available from Nippon Light Metal Co., Ltd.) to a concentration of 13 mass% with water, was added all at once to the flask. The reaction temperature increased to 22.8°C after 2 minutes, and then approached 20°C. When GC analysis was carried out after 3 hours using the same method as that used in Test Example 1, it was found that 87.6 GC% of methylphenylsulfone had been obtained, but 9.8 GC% of raw material remained, and the reaction was not complete. When GC internal standard analysis was carried out after 6 hours, it was found that 97.5 mass% of methylphenylsulfone had been generated. In the same way as in Test Example 1, sodium sulfite was added, the toluene layer was separated off, washed with water and dried using Glauber's salt, after which the solvent was distilled off to obtain 1.54 g of white crystals (yield: 98.2%), which had a melting point of 86°C.

### [Comparative Test Example 2]

1.24 g (10 mmol) of thioanisole and 30 mL of toluene were placed in a 50-mL 3-mouthed flask and, while stirring the contents of the flask in a water bath at a temperature of 20°C, 13.33 g (24 mmol, pH 13) of a commercially available aqueous sodium hypochlorite solution having a concentration of 13 mass% (Nikkei Ziaso available from Nippon Light Metal Co., Ltd.) was added all at once to the flask. When GC analysis was carried out after 6 hours using the same method as that used in Test Example 1, it was found that 9.3 GC% of methylphenylsulfone had been obtained, but 89.9 GC% of raw material remained, and the reaction was not complete. When GC analysis was carried out after 24 hours, 55.5 mass% of raw material thioanisole remained, 6.2 mass% of methylphenyl sulfoxide, which was not the target product, had been generated, and only 38.2 mass% of methylphenylsulfone, which was the target product, had been generated.

### [Comparative Test Example 3]

1.24 g (10 mmol) of thioanisole and 30 mL of toluene were placed in a 50-mL 3-mouthed flask and, while stirring the contents of the flask in a water bath at a temperature of 20°C, 12.81 g (24 mmol, pH 10.2) of an aqueous solution, which was obtained by diluting the sodium hypochlorite pentahydrate crystals of Comparative Example 2 to a concentration of 13 mass% with water, was added all at once to the flask. At this point, a rise in temperature was not observed, in the same way as in Comparative Test Example 2. When GC analysis was carried out after 6 hours using the same method as that used in Test Example 1, it was found that 66.2 GC% of methylphenylsulfone had been obtained, but 31.3 GC% of raw material remained, and the reaction was not complete. When GC internal standard analysis was carried out after 10 hours, it was found that 72.0 mass% of methylphenylsulfone had been generated.

**[Table 2]**

| Reactivity evaluations of sodium hypochlorites | | | |
|---|---|---|---|
| No. | Form of sodium hypochlorite | Reaction time (h) | GC yield (%) of methylphenylsulf one |
| Test Example 1 | Working Example 2 product (surface-modified sodium hypochlorite pentahydrate crystals) | 3 | 99.4 |
| Test Example 2 | Working Example 8 product (surface-modified sodium hypochlorite pentahydrate crystals) | 3 | 98.8 |
| Comparative Test Example 1 | Commercially available product (non-surface-modified sodium hypochlorite pentahydrate crystals) | 6 | 97.5 |
| Comparative Test Example 2 | Commercially available product (13 mass% aqueous solution of sodium hypochlorite pentahydrate) | 24 | 38.2 |
| Comparative Test Example 3 | Comparative Example 2 product (sodium hypochlorite pentahydrate crystals washed with pure water) | 6 | 66.2 |

## Claims

1. A surface-modified sodium hypochlorite pentahydrate crystal which has a salt and/or an acid attached to the surface thereof, wherein
the salt and/or acid produces an acid-derived anion having at least one acid dissociation constant (pKa) of 1.9 or more and 11 or less in aqueous solution, and wherein the surface-modified sodium hypochlorite pentahydrate crystal
i) contains 0.001 to 0.7 mass% of sodium hydroxide and has an anion concentration of 500 ppm or more, or
ii) contains 0.001 to 0.07 mass% of sodium hydroxide and has an anion concentration of 100 ppm or more and less than 500 ppm.

2. The surface-modified sodium hypochlorite pentahydrate crystal according to claim 1, wherein the salt and/or acid produces an acid-derived anion having at least one acid dissociation constant (pKa) of 4 or more and 11 or less.

3. The surface-modified sodium hypochlorite pentahydrate crystal according to claim 1, wherein the salt is one or more inorganic acid salts selected from a carbonate, a hydrogen carbonate, a sulfate, a hydrogen sulfate, a phosphate and a hydrogen phosphate, and/or one or more organic acid salts selected from a monocarboxylate, a dicarboxylate and a tricarboxylate, and wherein the acid is one or more organic acids selected from a monocarboxylic acid, a dicarboxylic acid and a tricarboxylic acid.

4. The surface-modified sodium hypochlorite pentahydrate crystal according to claim 3, wherein the salt is one or more of sodium carbonate, sodium hydrogen carbonate, sodium sulfate, sodium hydrogen sulfate, sodium phosphate, disodium hydrogen phosphate, sodium dihydrogen phosphate, sodium acetate, monosodium oxalate, disodium oxalate, sodium citrate, disodium citrate and trisodium citrate, and wherein the acid is one or more of acetic acid, oxalic acid and citric acid.

5. A method for producing the surface-modified sodium hypochlorite pentahydrate crystal according to any one of claims 1 to 4, comprising a surface modification for attaching a salt and/or an acid to the surface of a sodium hypochlorite pentahydrate crystal, wherein
the salt and/or acid produces an acid-derived anion having at least one acid dissociation constant (pKa) of 1.9 or more and 11 or less, and wherein
the surface modification comprises a washing step of washing sodium hypochlorite pentahydrate crystals using a solution containing the salt and/or acid that produces an acid-derived anion having at least one acid dissociation constant (pKa) of 1.9 or more and 11 or less, and a solid-liquid separation step of separating the washed sodium hypochlorite pentahydrate crystal, or comprises a gas treatment step of bringing carbon dioxide gas into contact with sodium hypochlorite pentahydrate crystal.

6. The method for producing a surface-modified sodium hypochlorite pentahydrate crystal according to claim 5, wherein the salt and/or acid produces an acid-derived anion having at least one acid dissociation constant (pKa) of 4 or more and 11 or less.

7. The method for producing a surface-modified sodium hypochlorite pentahydrate crystal according to claim 5, wherein the salt is one or more inorganic acid salts selected from a carbonate, a hydrogen carbonate, a sulfate, a hydrogen sulfate, a phosphate and a hydrogen phosphate, and/or one or more organic acid salts selected from a monocarboxylate, a dicarboxylate and a tricarboxylate, and wherein the acid is one or more organic acids selected from a monocarboxylic acid, a dicarboxylic acid and a tricarboxylic acid.

8. The method for producing a surface-modified sodium hypochlorite pentahydrate crystal according to claim 7, wherein the salt is one or more of sodium carbonate, sodium hydrogen carbonate, sodium sulfate, sodium hydrogen sulfate, sodium phosphate, disodium hydrogen phosphate, sodium dihydrogen phosphate, sodium acetate, monosodium oxalate, disodium oxalate, sodium citrate, disodium citrate and trisodium citrate, and wherein the acid is one or more of acetic acid, oxalic acid and citric acid.

## Patentansprüche

1. Ein oberflächenmodifizierter Natriumhypochlorit-Pentahydrat-Kristall, an dessen Oberfläche ein Salz und/oder eine Säure gebunden ist, wobei
das Salz und/oder die Säure in wässriger Lösung ein von einer Säure abgeleitetes Anion mit mindestens einer Säuredissoziationskonstante (pKa) von 1,9 oder mehr und 11 oder weniger erzeugt, und wobei der oberflächenmodifizierte Natriumhypochlorit-Pentahydrat-Kristall
i) 0,001 bis 0,7 Massen-% Natriumhydroxid enthält und eine Anionenkonzentration von 500 ppm oder mehr aufweist, oder
ii) 0,001 bis 0,07 Massen-% Natriumhydroxid enthält und eine Anionenkonzentration von 100 ppm oder mehr und weniger als 500 ppm aufweist.

2. Der oberflächenmodifizierte Natriumhypochlorit-Pentahydrat-Kristall gemäß Anspruch 1, wobei das Salz und/oder die Säure ein von einer Säure abgeleitetes Anion mit mindestens einer Säuredissoziationskonstante (pKa) von 4 oder mehr und 11 oder weniger erzeugt.

3. Der oberflächenmodifizierte Natriumhypochlorit-Pentahydrat-Kristall gemäß Anspruch 1, wobei das Salz ein oder mehrere anorganische Säuresalz(e) ist, ausgewählt aus einem Carbonat, einem Hydrogencarbonat, einem Sulfat, einem Hydrogensulfat, einem Phosphat und einem Hydrogenphosphat und/oder ein oder mehrere organischen Säuresalz(e) ist, ausgewählt aus einem Monocarboxylat, einem Dicarboxylat und einem Tricarboxylat, und wobei die Säure eine oder mehrere organische Säure(n) ist, ausgewählt aus einer Monocarbonsäure, einer Dicarbonsäure und einer Tricarbonsäure.

4. Der oberflächenmodifizierte Natriumhypochlorit-Pentahydrat-Kristall gemäß Anspruch 3, wobei das Salz eines oder mehrere von Natriumcarbonat, Natriumhydrogencarbonat, Natriumsulfat, Natriumhydrogensulfat, Natriumphosphat, Dinatriumhydrogenphosphat, Natriumdihydrogenphosphat, Natriumacetat, Mononatriumoxalat, Dinatriumoxalat, Natriumcitrat, Dinatriumcitrat und Trinatriumcitrat ist, und wobei die Säure eine oder mehrere von Essigsäure, Oxalsäure und Zitronensäure ist.

5. Ein Verfahren zur Herstellung des oberflächenmodifizierten Natriumhypochlorit-Pentahydrat-Kristalls gemäß einem der Ansprüche 1 bis 4, umfassend eine Oberflächenmodifikation zum Binden eines Salzes und/oder einer Säure an die Oberfläche eines Natriumhypochlorit-Pentahydrat-Kristalls, wobei
das Salz und/oder die Säure ein von einer Säure abgeleitetes Anion mit mindestens einer Säuredissoziationskonstante (pKa) von 1,9 oder mehr und 11 oder weniger erzeugt, und wobei
die Oberflächenmodifizierung einen Waschschritt des Waschens von Natriumhypochlorit-Pentahydrat-Kristallen unter Verwendung einer Lösung, die das Salz und/oder die Säure enthält, die ein von einer Säure abgeleitetes Anion mit mindestens einer Säuredissoziationskonstante (pKa) von 1,9 oder mehr und 11 oder weniger erzeugt, sowie einen Fest-Flüssig-Trennungsschritt des Trennens der gewaschenen Natriumhypochlorit-Pentahydrat-Kristalle umfasst oder einen Gasbehandlungsschritt umfasst, bei dem Kohlendioxidgas mit Natriumhypochlorit-Pentahydrat-Kristallen in Kontakt gebracht wird.

6. Das Verfahren zur Herstellung eines oberflächenmodifizierten Natriumhypochlorit-Pentahydrat-Kristalls gemäß Anspruch 5, wobei das Salz und/oder die Säure ein von einer Säure abgeleitetes Anion mit mindestens einer Säuredissoziationskonstante (pKa) von 4 oder mehr und 11 oder weniger erzeugt.

7. Das Verfahren zur Herstellung eines oberflächenmodifizierten Natriumhypochlorit-Pentahydrat-Kristalls gemäß Anspruch 5, wobei das Salz ein oder mehrere anorganische Säuresalz(e) ist, ausgewählt aus einem Carbonat, einem Hydrogencarbonat, einem Sulfat, einem Hydrogensulfat, einem Phosphat und einem Hydrogenphosphat und/oder ein oder mehrere organische Säuresalz(e), ausgewählt aus einem Monocarboxylat, einem Dicarboxylat und einem Tricarboxylat, und wobei die Säure eine oder mehrere organische Säure(n) ist, ausgewählt aus einer Monocarbonsäure, einer Dicarbonsäure und einer Tricarbonsäure.

8. Das Verfahren zur Herstellung eines oberflächenmodifizierten Natriumhypochlorit-Pentahydrat-Kristalls gemäß Anspruch 7, wobei das Salz eines oder mehrere von Natriumcarbonat, Natriumhydrogencarbonat, Natriumsulfat, Natriumhydrogensulfat, Natriumphosphat, Dinatriumhydrogenphosphat, Natriumdihydrogenphosphat, Natriumacetat, Mononatriumoxalat, Dinatriumoxalat, Natriumcitrat, Dinatriumcitrat und Trinatriumcitrat ist und wobei die Säure eine oder mehrere von Essigsäure, Oxalsäure und Zitronensäure ist.

## Revendications

1. Cristal d'hypochlorite de sodium pentahydraté modifié en surface qui a un sel et/ou un acide attaché à sa surface,
dans lequel le sel et/ou l'acide produit un anion dérivé d'un acide ayant au moins une constante de dissociation acide (pKa) de 1,9 ou plus et 11 ou moins en solution aqueuse,
et lequel cristal d'hypochlorite de sodium pentahydraté modifié en surface
i) contient 0,001 à 0,7 % en masse d'hydroxyde de sodium et a une concentration d'anions de 500 ppm ou plus, ou
ii) contient 0,001 à 0,07 % en masse d'hydroxyde de sodium et a une concentration d'anions de 100 ppm ou plus et inférieure à 500 ppm.

2. Cristal d'hypochlorite de sodium pentahydraté modifié en surface selon la revendication 1, dans lequel le sel et/ou l'acide produit un anion dérivé d'un acide ayant au moins une constante de dissociation acide (pKa) de 4 ou plus et 11 ou moins.

3. Cristal d'hypochlorite de sodium pentahydraté modifié en surface selon la revendication 1, dans lequel le sel est un ou plusieurs sels d'acides inorganiques choisis parmi un carbonate, un hydrogénocarbonate, un sulfate, un hydrogénosulfate, un phosphate et un hydrogénophosphate, et/ou un ou plusieurs sels d'acides organiques choisis parmi un monocarboxylate, un dicarboxylate et un tricarboxylate, et dans lequel l'acide est un ou plusieurs acides organiques choisis parmi un acide monocarboxylique, un acide dicarboxylique et un acide tricarboxylique.

4. Cristal d'hypochlorite de sodium pentahydraté modifié en surface selon la revendication 3, dans lequel le sel est un ou plusieurs parmi le carbonate de sodium, l'hydrogénocarbonate de sodium, le sulfate de sodium, l'hydrogénosulfate de sodium, le phosphate de sodium, l'hydrogénophosphate disodique, le dihydrogénophosphate de sodium, l'acétate de sodium, l'oxalate monosodique, l'oxalate disodique, le citrate de sodium, le citrate disodique et le citrate trisodique, et dans lequel l'acide est un ou plusieurs parmi l'acide acétique, l'acide oxalique et l'acide citrique.

5. Méthode pour produire le cristal d'hypochlorite de sodium pentahydraté modifié en surface de l'une quelconque des revendications 1 à 4, comprenant une modification de surface pour attacher un sel et/ou un acide à la surface d'un cristal d'hypochlorite de sodium pentahydraté,
dans laquelle le sel et/ou l'acide produit un anion dérivé d'un acide ayant au moins une constante de dissociation acide (pKa) de 1,9 ou plus et 11 ou moins,
et dans laquelle la modification de surface comprend une étape de lavage dans laquelle des cristaux d'hypochlorite de sodium pentahydraté sont lavés au moyen d'une solution contenant le sel et/ou l'acide qui produit un anion dérivé d'un acide ayant au moins une constante de dissociation acide (pKa) de 1,9 ou plus et 11 ou moins, et une étape de séparation solide-liquide dans laquelle le cristal d'hypochlorite de sodium pentahydraté lavé est séparé, ou comprend une étape de traitement par un gaz dans laquelle du dioxyde de carbone gazeux est mis en contact avec le cristal d'hypochlorite de sodium pentahydraté.

6. Méthode pour produire un cristal d'hypochlorite de sodium pentahydraté modifié en surface selon la revendication 5, dans laquelle le sel et/ou l'acide produit un anion dérivé d'un acide ayant au moins une constante de dissociation acide (pKa) de 4 ou plus et 11 ou moins.

7. Méthode pour produire un cristal d'hypochlorite de sodium pentahydraté modifié en surface selon la revendication 5, dans laquelle le sel est un ou plusieurs sels d'acides inorganiques choisis parmi un carbonate, un hydrogénocarbonate, un sulfate, un hydrogénosulfate, un phosphate et un hydrogénophosphate, et/ou un ou plusieurs sels d'acides organiques choisis parmi un monocarboxylate, un dicarboxylate et un tricarboxylate, et dans laquelle l'acide est un ou plusieurs acides organiques choisis parmi un acide monocarboxylique, un acide dicarboxylique et un acide tricarboxylique.

8. Méthode pour produire un cristal d'hypochlorite de sodium pentahydraté modifié en surface selon la revendication 7, dans laquelle le sel est un ou plusieurs parmi le carbonate de sodium, l'hydrogénocarbonate de sodium, le sulfate de sodium, l'hydrogénosulfate de sodium, le phosphate de sodium, l'hydrogénophosphate disodique, le dihydrogénophosphate de sodium, l'acétate de sodium, l'oxalate monosodique, l'oxalate disodique, le citrate de sodium, le citrate disodique et le citrate trisodique, et dans laquelle l'acide est un ou plusieurs parmi l'acide acétique, l'acide oxalique et l'acide citrique.
